(19) Europäisches Patentamt
European Patent Office
Office européen des brevets

(11) **EP 3 170 285 B1**

(12) **EUROPÄISCHE PATENTSCHRIFT**

(45) Veröffentlichungstag und Bekanntmachung des Hinweises auf die Patenterteilung:
**17.04.2019 Patentblatt 2019/16**

(21) Anmeldenummer: **14766946.9**

(22) Anmeldetag: **10.09.2014**

(51) Int Cl.:
*H04L 12/26* (2006.01)    *H04J 3/06* (2006.01)

(86) Internationale Anmeldenummer:
**PCT/EP2014/069263**

(87) Internationale Veröffentlichungsnummer:
**WO 2016/037645 (17.03.2016 Gazette 2016/11)**

(54) **VERFAHREN ZUM BESTIMMEN EINER ÜBERTRAGUNGSZEIT EINES TELEGRAMMS IN EINEM KOMMUNIKATIONSNETZWERK UND ENTSPRECHENDE NETZWERKKOMPONENTEN**

METHOD FOR DETERMINING A PROPAGATION TIME OF A TELEGRAM IN A COMMUNICATION NETWORK, AND CORRESPONDING NETWORK COMPONENTS

PROCÉDÉ DE DÉTERMINATION DU TEMPS DE TRANSMISSION D'UN TÉLÉGRAMME DANS UN RÉSEAU DE COMMUNICATION ET COMPOSANTS DE RÉSEAU CORRESPONDANTS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**24.05.2017 Patentblatt 2017/21**

(73) Patentinhaber: **Siemens Aktiengesellschaft 80333 München (DE)**

(72) Erfinder: **HEINE, Holger 26607 Aurich (DE)**

(56) Entgegenhaltungen:
**US-A1- 2011 141 922    US-B2- 8 289 858**

**Beschreibung**

Die Erfindung betrifft ein Verfahren zum Bestimmen einer Übertragungszeit eines Telegramms in einem Kommunikationsnetzwerk, bei dem ein Telegramm von einer ersten Netzwerkkomponente an eine zweite Netzwerkkomponente entlang einer Kommunikationsverbindung übertragen wird, wobei die erste Netzwerkkomponente einen Sendezeitpunkt des Telegramms erfasst und eine entsprechende Sendezeitpunkt-Information des Telegramms abspeichert, und unter Verwendung der Sendezeitpunkt-Information die Übertragungszeit des Telegramms entlang der Kommunikationsverbindung bestimmt wird, wobei die zweite Netzwerkkomponente das Telegramm unmittelbar nach seinem Eintreffen bei der zweiten Netzwerkkomponente an die erste Netzwerkkomponente zurücksendet, die erste Netzwerkkomponente bei Empfang des zurückgesendeten Telegramms einen Empfangszeitpunkt des Telegramms erfasst und eine entsprechende Empfangszeitpunkt-Information des Telegramms abspeichert, und die Übertragungszeit des Telegramms entlang der Kommunikationsverbindung unter Verwendung der Sendezeitpunkt-Information des Telegramms und der Empfangszeitpunkt-Information des Telegramms bestimmt wird.

Die Erfindung betrifft auch entsprechend eingerichtete Netzwerkkomponenten zum Betrieb in einem Kommunikationsnetzwerk.

In Kommunikationsnetzwerken besteht häufig die Anforderung, mit dem Kommunikationsnetzwerk verbundene Netzwerkkomponenten zeitlich miteinander zu synchronisieren. Dazu beinhalten die einzelnen Netzwerkkomponenten üblicherweise eigene Uhren, die mittels spezieller Verfahren aufeinander zu synchronisieren sind. Als Netzwerkkomponenten werden in diesem Zusammenhang beispielsweise Endgeräte in einem Kommunikationsnetzwerk oder den Netzwerkverkehr steuernde und regelnde Geräte, z.B. Switches, Bridges, Router, angesehen. Auch Endgeräte mit einem integrierten Gerät zum Steuern und Regeln des Netzwerkverkehrs, z.B. ein Endgerät mit integrierten Switch, werden nachfolgend als Netzwerkkomponente bezeichnet.

Besonders wichtig ist eine genaue Zeitsynchronisation in Automatisierungs- und Steueranlagen für technische Anlagen und Prozesse, die räumlich verteilte Automatisierungsgeräte aufweisen, die über ein Kommunikationsnetzwerk miteinander verbunden sind. Anforderungen, die eine zeitliche Synchronisation voraussetzen, bestehen hierbei beispielsweise darin, Messwerte mit mehreren Automatisierungsgeräten zeitlich synchron erfassen zu können oder Messwerte von mehreren Automatisierungsgeräten aufgrund von Zeitstempeln miteinander vergleichen zu können. Außerdem müssen Überwachungs-, Steuer- und Regelaufgaben häufig zeitlich exakt miteinander synchronisiert ausgeführt werden. In solchen Automatisierungs- und Steueranlagen müssen die Uhren verschiedener Automatisierungsgeräte üblicherweise im Mikrosekundenbereich aufeinander synchronisiert sein. Ein Beispiel einer Automatisierungsanlage ist eine Energieautomatisierungsanlage zur Steuerung und Überwachung und zum Schutz elektrischer Energieversorgungsnetze und Schaltstationen ("Substation Automation System").

Eine Möglichkeit zur Synchronisation von Uhren verteilter Netzwerkkomponenten besteht darin, in jeder Netzwerkkomponente einen mittels eines Funksenders verteilten Zeittakt zu empfangen und die jeweilige geräteinterne Uhr an den Zeittakt anzupassen. Beispielsweise kann hierfür das von dem satellitengestützten GPS-System (GPS - Global Positioning System) ausgesandte Zeitsignal verwendet werden. Diese Lösung ist aufgrund der hierfür notwendigen Empfänger in allen zu synchronisierenden Netzwerkkomponenten vergleichsweise teuer; außerdem ist nicht überall ein ausreichender Empfang des GPS-Zeitsignals gewährleistet.

Eine andere Möglichkeit besteht darin, das Kommunikationsnetz selbst zur Zeitsynchronisation zu verwenden. In diesem Fall werden innerhalb des Kommunikationsnetzes Zeitsynchronisationsnachrichten übertragen und zur Zeitsynchronisation herangezogen.

Eine Methode zur Durchführung einer Zeitsynchronisation mittels Zeitsynchronisationsnachrichten ist beispielsweise im internationalen Standard IEEE 1588-2008 festgelegt und wird als "Precision Time Protocol" (PTP) bezeichnet. Gemäß dem PTP-Standard wird innerhalb eines Kommunikationsnetzwerks eine Netzwerkkomponente mittels eines sogenannten "Best Master Clock" Algorithmus als sogenannte "Grandmaster-Uhr" (nachfolgend auch als "Grandmaster" bezeichnet) ausgewählt, auf dessen Uhr alle anderen Netzwerkkomponenten (Slave-Uhren bzw. "Ordinary Clocks", nachfolgend auch als "Slaves" bezeichnet) zu synchronisieren sind. Dazu sendet der Grandmaster Zeitsynchronisationsnachrichten zu einem gemäß der eigenen Uhr bestimmten Absendezeitpunkt $tsync._1$. an die Slaves. Dieser Zeitpunkt $tsync._1$ .wird entweder direkt. .in der Zeitsynchronisationsnachricht eingetragen oder in einer Folgenachricht an die Slaves übermittelt. Der jeweilige Slave empfängt die Zeitsynchronisationsnachricht zum Zeitpunkt $tsync._2$. und kann bei bekannter Laufzeit der Zeitsynchronisationsnachricht zwischen dem Absendezeitpunkt $tsync._1$. beim Grandmaster und dem Empfangszeitpunkt $tsync._2$. seine eigene Uhr entsprechend nachführen.

Die Laufzeit zwischen dem Grandmaster und der jeweiligen Slave-Uhr wird insbesondere durch die Übertragungszeit der Zeitsynchronisationsnachricht entlang der zwischen dem Grandmaster und der Slave-Uhr vorhandenen Kommunikationsverbindungen, z.B. kabelgebundenen Kommunikationsleitungen, bestimmt. Liegen auf dem Übertragungspfad der Zeitsynchronisationsnachricht zwischen der Grandmaster-Uhr und der Slave-Uhr noch weitere Netzwerkkomponenten (z.B. Switche, die als sogenannte "Transparent Clocks" gemäß IEEE 1588:2008 eingerichtet sind), so wird die Laufzeit auch durch die Verweilzeit der Zeitsynchronisationsnachricht in diesen zwischen dem Grandmaster und der Slave-Uhr liegenden Netzwerkkomponenten bestimmt. Während die Verweilzeit in den fraglichen Netzwerkkomponenten mit den jeweiligen lokalen Uhren erfasst werden kann, muss die Übertragungszeit entlang der Kommunikationsverbindungen durch Messung bestimmt werden. Hierzu wird gemäß dem Standard IEEE 1588:2008 jeweils zwischen zwei benachbarten Netzwerkkomponenten das sogenannte "Pdelay-Verfahren" eingesetzt. Dabei sendet eine erste Netzwerkkomponente i, z.B. die Slave-Uhr, zum Zeitpunkt $t_{-1}$ ein Telegramm ("Pdelay_Req") an eine benachbarte zweite Netzwerkkomponente j, z.B. einen Switch. Diese benachbarte Netzwerkkomponente j empfängt das Telegramm und speichert dessen Eingangszeitpunkt $t_2$. Daraufhin sendet die benachbarte Netzwerkkomponente j selbst ein weiteres Telegramm ("Pdelay_Resp") an die erste Netzwerkkomponente i und erfasst dessen Absendezeitpunkt $t_3$. Dieser Absendezeitpunkt $t_3$ sowie der Empfangszeitpunkt $t_2$ werden in dem Telegramm selbst oder einem Folgetelegramm an die erste Netzwerkkomponente i übertragen. Die erste Netzwerkkomponente i empfängt dieses Telegramm und speichert dessen Empfangszeitpunkt $t_4$. Bei der ersten Netzwerkkomponente i liegen nunmehr die Zeitpunkte $t_{-1}$ bis $t_4$ vor. Daraus kann diese unter Verwendung der Gleichung

$$T_{i\_j} = \frac{(t_2 - t_1) + (t_4 - t_3)}{2}$$

die Übertragungszeit $T_{i\_j}$ eines Telegramms zwischen der Netzwerkkomponente i und der Netzwerkkomponente j berechnen.

Um eine möglichst genaue Zeitsynchronisation zu gewährleisten, ist es notwendig, die Übertragungszeit zwischen zwei Netzwerkkomponenten möglichst genau zu bestimmen. Die Bestimmung der jeweiligen Sende- und Empfangszeitpunkte findet innerhalb der jeweiligen Netzwerkkomponenten durch eine Zeitstempelung statt. Zur Zeitstempelung stellt jede Netzwerkkomponente einen Zeitstempeltakt zur Verfügung, der von der jeweiligen geräteinternen Uhr abgeleitet ist und zur Vergabe der Zeitstempel für die Sende- und Empfangszeitpunkte herangezogen wird. Je schneller der Zeitstempeltakt hierbei bemessen ist, desto genauer können Zeitstempel für bestimmte Ereignisse vergeben werden.

Jedoch besteht auch bei vergleichsweise schnell laufenden Zeitstempeltakten die Möglichkeit, dass ein Ereignis zwischen zwei Taktimpulsen des Zeitstempeltaktes auftritt, so dass eine Vergabe des Zeitstempels für ein solches Ereignis ungenauer stattfinden kann und damit beispielsweise bei Anwendung des oben genannten Algorithmus zur Pdelay-Bestimmung zu Ungenauigkeiten führen kann.

Insbesondere in komplexen Kommunikationsnetzwerken mit vielen hintereinanderliegenden Netzwerkkomponenten (z.B. in ringförmig aufgebauten Kommunikationsnetzwerken, wie sie aus Redundanzgründen häufiger für Automatisierungssysteme eingesetzt werden), können sich solche zwischen jeweils benachbarten Netzwerkkomponenten ermittelten Ungenauigkeiten schnell zu Werten akkumulieren, die wegen ihres Einflusses auf die Anpassung der einzelnen Uhren an die Grandmaster-Uhr eine exakte Zeitsynchronisation der einzelnen Netzwerkkomponenten im Netzwerk erschweren können.

Ein Verfahren der eingangs genannten Art ist beispielsweise aus der US 2011/141922 A1 bekannt. Ein ähnliches Verfahren zeigt auch die US 8 289 858 B2.

Der Erfindung liegt daher ausgehend von einem Verfahren der eingangs genannten Art die Aufgabe zugrunde, die Genauigkeit bei der Bestimmung der Übertragungszeit zu erhöhen.

Diese Aufgabe wird durch ein Verfahren der eingangs genannten Art gelöst, bei dem die zweite Netzwerkkomponente das Telegramm lediglich auf einer physikalischen Bitübertragungsebene empfängt und nach dem Empfang direkt an die erste Netzwerckomponente zurücksendet und die erste Netzwerkkomponente den Zeitpunkt des Versendens des Telegramms mit einem für eine interne Zeitstempelung verwendeten Zeitstempeltakt synchronisiert.

Der Erfindung liegt die Erkenntnis zugrunde, dass die Ungenauigkeiten bei der Bestimmung der Übertragungszeit zu einem großen Teil auf die Vergabe eines Zeitstempels zu den Sende- bzw. Empfangszeitpunkten zurückzuführen sind. Insbesondere die Vergabe eines Zeitstempels für einen Empfangszeitpunkt kann nämlich mit vergleichbar größeren Ungenauigkeiten verbunden sein. Die Erfindung nutzt diese Erkenntnis und reduziert daher die Anzahl der für die Bestimmung der Übertragungszeit notwendigen Zeitstempel von vier Zeitstempeln, die gemäß dem bekannten Pdelay-Verfahren vergeben werden müssen, auf nur noch zwei Zeitstempel. Hierzu wird von der zweiten Netzwerkkomponente das empfangene Telegramm unmittelbar, also ohne zeitliche Verzögerung, wieder an die erste Netzwerkkomponente zurückgesendet, so dass von der zweiten Netzwerkkomponente überhaupt keine Zeitstempelungen mehr vergeben werden müssen. Da die Zeitstempel somit nur noch von der ersten Netzwerkkomponente vergeben werden müssen, sind auch etwaige Zeit- oder Gangunterschiede zwischen den lokalen Uhren der beiden Netzwerkkomponenten unerheblich. Insbesondere fällt bei dem erfindungsgemäßen Verfahren einer der beiden gemäß dem bekannten Verfahren benötigten Zeitstempel für den Empfangszeitpunkt weg, nämlich derjenige Zeitstempel, der den Empfangszeitpunkt des von der ersten Netzwerkkomponente ausgesendeten Telegramms bei der zweiten Netzwerkkomponente angibt. Insgesamt kann daher eine deutliche Erhöhung der Genauigkeit bei der Bestimmung der Übertragungszeit des Telegramms erreicht werden.

Die ermittelte Übertragungszeit kann für die fragliche Kommunikationsverbindung als Parameter für die Zeitsynchronisation unter Verwendung von Zeitsynchronisationsnachrichten verwendet werden. Sollten zwischen einer Grandmaster-Uhr und einer Slave-Uhr mehrere Kommunikationsverbindungen liegen, so sind deren Übertragungszeiten entsprechend zu bestimmen und für die Gesamtstrecke zu addieren. Zudem sind die Verweilzeiten der Zeitsynchronisationsnachrichten in den jeweiligen Netzwerkkomponenten zu berücksichtigen, die von den Netzwerkkomponenten jedoch selbst bestimmt werden können. Im Falle einer sogenannten "Transparent Clock" gemäß der Norm IEEE 1588:2008 trägt die fragliche Netzwerkkomponente die Verweilzeit des Telegramms jeweils direkt in die Zeitsynchronisationsnachricht ein.

Ein weiterer Vorteil des erfindungsgemäßen Verfahrens besteht darin, dass es sich leicht innerhalb eines Schaltungsbausteins mit Hardwarecodierung (z.B. FPGA, ASIC) implementieren lässt und keine Änderung der Betriebssoftware einer Netzwerkkomponente erfordert.

Das erfindungsgemäße Verfahren sollte bei oder vor der Inbetriebnahme eines Kommunikationsnetzwerks durchgeführt werden, um für die im Betrieb des Kommunikationsnetzwerks durchzuführende Zeitsynchronisation alle notwendigen Parameter vorhalten zu können. Es empfiehlt sich zudem, das Verfahren in regelmäßigen oder unregelmäßigen Abständen und/oder auf ereignisgesteuert (z.B. bei Änderung der Netzwerktopologie) und/oder auf Anforderung durch einen Betreiber (z.B. nach Austausch einer Kommunikationsverbindung) des Kommunikationsnetzwerks wiederholt durchzuführen, um die aktuellen Werte der Übertragungszeiten zu überprüfen und ggf. anzupassen.

Erfindungsgemäß ist zudem vorgesehen, dass die zweite Netzwerkkomponente das Telegramm lediglich auf einer physikalischen Bitübertragungsebene empfängt und nach dem Empfang direkt an die erste Netzwerkkomponente zurücksendet.

Hierdurch kann vorteilhaft erreicht werden, dass das Telegramm quasi ohne Verweildauer in der zweiten Netzwerkkomponente an die erste Netzwerkkomponente zurückgesendet wird, da von der zweiten Netzwerkkomponente keinerlei lokale Bearbeitungsschritte bezüglich des Telegramms ausgeführt werden und die Weiterleitung rein auf der physikalischen Schaltungsebene (Hardware) stattfindet, ohne hierzu programmgesteuerte Verarbeitungen (Software) ausführen zu müssen. Der beschriebene Kommunikationsmodus wird auch als "Schleifenbetrieb" oder "Loop Mode" bezeichnet. Als physikalische Bitübertragungsebene wird hierbei die gemäß dem OSI-Modell (Open Systems Interconnection Model) unterste Übertragungsschicht angesehen.

Außerdem ist erfindungsgemäß vorgesehen, dass die erste Netzwerkkomponente den Zeitpunkt des Versendens des Telegramms mit einem für eine interne Zeitstempelung verwendeten Zeitstempeltakt synchronisiert.

Hierdurch kann die Genauigkeit der Bestimmung der Übertragungszeit nochmals erhöht werden, da durch die Synchronisierung des Versende-Zeitpunkts des Telegramms mit dem Zeitstempeltakt das Telegramm exakt zum Zeitpunkt des Auftretens eines Zeitstempelimpulses versendet werden kann. Somit bildet nur noch der nicht mit einem Zeitstempeltakt synchronisierbare, da nicht vorhersagbare, Empfangszeitpunkt eine mögliche Unsicherheit bei der Bestimmung der Übertragungszeit. Bei hinreichend schnell gewähltem Zeitstempeltakt können diese Unsicherheiten jedoch in Grenzen gehalten werden.

Konkret kann gemäß einer vorteilhaften Weiterbildung des erfindungsgemäßen Verfahrens unter der Annahme symmetrischer Laufzeiten des Telegramms in Hin- und Rückrichtung entlang der Kommunikationsverbindung zwischen den beiden Netzwerkkomponenten die Übertragungszeit des Telegramms entlang der Kommunikationsverbindung gemäß der Gleichung

$$T_{i\_j} = \frac{t_{i2} - t_{i1}}{2}$$

bestimmt werden. Hierbei haben die einzelnen Ausdrücke folgende Bedeutung:

$T_{\cdot i\_j\cdot}$: Übertragungszeit des Telegramms entlang der Kommunikationsverbindung zwischen Netzwerkkomponente i und Netzwerkkomponente j;

$t_{i1}$: Sendezeitpunkt-Information, die den Sendezeitpunkt des Telegramms bei Netzwerkkomponente i angibt;

$t_{i2}$: Empfangszeitpunkt-Information, die den Empfangszeitpunkt des Telegramms bei Netzwerkkomponente i angibt.

Die oben genannte Annahme symmetrischer Laufzeiten ist in Automatisierungssystemen üblicherweise hinreichend genau erfüllt.

Eine weitere vorteilhafte Ausführungsform des erfindungsgemäßen Verfahrens sieht zudem vor, dass das Telegramm eine Testdatenfolge enthält.

Hierdurch kann einerseits das Telegramm hinsichtlich seines Aufbaus an durchschnittliche, in dem Kommunikationsnetzwerk zu übertragende Telegramme, insbesondere die für die Zeitsynchronisation erforderlichen Zeitsynchronisationsnachrichten, angenähert werden. Andererseits kann das Telegramm hierdurch leicht von etwaigen anderen Telegrammen unterschieden werden, so dass sichergestellt ist, dass zur Bestimmung der Übertragungszeit auch wirklich das richtige Telegramm herangezogen wird.

Gemäß einer weiteren vorteilhaften Ausführungsform ist zudem vorgesehen, dass auch die zweite Netzwerkkomponente eine Übertragungszeit eines weiteren Telegramms zwischen der zweiten Netzwerkkomponente und der ersten Netzwerkkomponente bestimmt, indem das weitere Telegramm von der zweiten Netzwerkkomponente an die erste Netzwerkkomponente entlang der Kommunikationsverbindung übertragen wird, wobei die zweite Netzwerkkomponente einen Sendezeitpunkt des weiteren Telegramms erfasst und eine entsprechende Sendezeitpunkt-Information des weiteren Telegramms abspeichert, die erste Netzwerkkomponente das weitere Telegramm unmittelbar nach seinem Eintreffen bei der ersten Netzwerkkomponente an die zweite Netzwerkkomponente zurücksendet, die zweite Netzwerkkomponente bei Empfang des zurückgesendeten weiteren Telegramms einen Empfangszeitpunkt des weiteren Telegramms erfasst und eine entsprechende Empfangszeitpunkt-Information des weiteren Telegramms abspeichert, und die Übertragungszeit des weiteren Telegramms entlang der Kommunikationsverbindung unter Verwendung der Sendezeitpunkt-Information des weiteren Telegramms und der Empfangszeitpunkt-Information des weiteren Telegramms bestimmt wird.

Gemäß dieser Ausführungsform lässt sich die Übertragungszeit in redundanter Weise bestimmen, da sie nämlich in entsprechender Weise einmal von der ersten Netzwerkkomponente und einmal von der zweiten Netzwerkkomponente bestimmt wird.

Besonders gut lässt sich in diesem Zusammenhang die Korrektheit der bestimmten Übertragungszeit überprüfen, indem die von der ersten Netzwerkkomponente bestimmte Übertragungszeit des Telegramms und die von der zweiten Netzwerkkomponente bestimmte Übertragungszeit des weiteren Telegramms miteinander verglichen werden, und bei einer vorliegenden Abweichung, die einen vorgegebenen Schwellenwert übersteigt, die bestimmten Übertragungszeiten verworfen werden.

Hierdurch wird sichergestellt, dass lediglich plausible Werte von Übertragungszeiten für die weitere Zeitsynchronisation verwendet werden. Da nämlich angenommen werden kann, dass die Bestimmungen der Übertragungszeit unabhängig von der Versenderichtung des Telegramms bzw. des weiteren Telegramms hinreichend gleiche Werte ergibt, kann bei signifikanten Unterschieden der bestimmten Übertragungszeiten auf einen Messfehler geschlossen werden, so dass die bestimmten Übertragungszeiten verworfen werden müssen. Die Messung kann nachfolgend erneut durchgeführt werden. Bei einer oder mehreren fehlgeschlagenen Bestimmungen der Übertragungszeit kann zudem eine Fehlermeldung an den Betreiber des Kommunikationsnetzwerks abgesetzt werden, um ggf. eine Wartung oder Überprüfung der Netzwerkkomponenten und/oder der Kommunikationsverbindung zu veranlassen. Entsprechend kann im Fall einer hinreichend genauen Übereinstimmung entweder einer der beiden bestimmten Werte der Übertragungszeiten oder ein Mittelwert daraus als endgültiger Wert für die Übertragungszeit entlang der Kommunikationsverbindung abgespeichert und für die Zeitsynchronisation verwendet werden.

Die oben genannte Aufgabe wird auch durch eine erste und eine zweite Netzwerkkomponente zum Betrieb in einem Kommunikationsnetz mit mehreren zeitlich miteinander zu synchronisierenden anderen Netzwerkkomponenten gelöst, wobei die erste und die zweite Netzwerkkomponente dazu eingerichtet sind, zum Bestimmen einer Übertragungszeit eines Telegramms entlang einer Kommunikationsverbindung zwischen der ersten Netzwerkkomponente und der zweiten Netzwerkkomponente ein Telegramm von der ersten Netzwerkkomponente an die zweite Netzwerkkomponente entlang der Kommunikationsverbindung zu versenden und einen Sendezeitpunkt des Telegramms zu erfassen und eine entsprechende Sendezeitpunkt-Information des Telegramms abzuspeichern, und unter Verwendung der Sendezeitpunkt-Information die Übertragungszeit des Telegramms entlang der Kommunikationsverbindung zu bestimmen.

Erfindungsgemäß ist vorgesehen, dass die zweite Netzwerkkomponente dazu eingerichtet ist, das Telegramm unmittelbar nach seinem Eintreffen bei der zweiten Netzwerkkomponente an die erste Netzwerkkomponente zurückzusenden, wobei die zweite Netzwerkkomponente das Telegramm lediglich auf einer physikalischen Bitübertragungsebene empfängt und nach dem Empfang direkt an die erste Netzwerkkomponente zurücksendet, die erste Netzwerkkomponente dazu eingerichtet ist, bei Empfang des zurückgesendeten Telegramms einen Empfangszeitpunkt des Telegramms zu erfassen und eine entsprechende Empfangszeitpunkt-Information des Telegramms abzuspeichern, die erste Netzwerckomponente dazu eingerichtet ist, die Übertragungszeit des Telegramms entlang der Kommunikationsverbindung unter Verwendung der Sendezeitpunkt-Information des Telegramms und der Empfangszeitpunkt-Information des Telegramms zu bestimmen, und die erste Netzwerkkomponente dazu eingerichtet ist, den Zeitpunkt des Versendens des Telegramms mit einem für eine interne Zeitstempelung verwendeten Zeitstempeltakt zu synchronisieren.

Hinsichtlich der erfindungsgemäßen Netzwerkkomponenten gelten alle zu dem erfindungsgemäßen Verfahren voranstehend und nachfolgend gemachten Ausführungen und umgekehrt in entsprechender Weise, insbesondere sind die erfindungsgemäßen Netzwerkkomponenten zur Durchführung des erfindungsgemäßen Verfahrens in jeder beliebigen Ausführungsform oder einer Kombination beliebiger Ausführungsformen eingerichtet. Auch hinsichtlich der Vorteile der erfindungsgemäßen Netzwerkkomponenten wird auf die zu dem erfindungsgemäßen Verfahren beschriebenen Vorteile verwiesen.

Die Erfindung wird nachfolgend anhand eines Ausführungsbeispiels näher erläutert. Die spezifische Ausgestaltung des Ausführungsbeispiels ist für die allgemeine Ausgestaltung des erfindungsgemäßen Verfahrens, der erfindungsgemäßen Netzwerckomponente und des erfindungsgemäßen Kommunikationsnetzwerks in keiner Weise einschränkend zu verstehen; vielmehr können einzelne Ausgestaltungsmerkmale des Ausführungsbeispiels in beliebiger Weise frei untereinander und mit den voranstehend beschriebenen Merkmalen kombiniert werden.

Es zeigen

Figur 1      ein erstes Ausführungsbeispiel eines Kommunikationsnetzwerks mit mehreren Netzwerkkomponenten;

Figur 2      ein zweites Ausführungsbeispiel eines Kommunikationsnetzwerks mit mehreren Netzwerkkomponenten;

Figur 3      ein schematisches Ablaufdiagramm zur Erläuterung der Bestimmung einer Übertragungszeit eines Telegramms entsprechend dem bekannten Pdelay-Verfahren nach IEEE 1588:2008; und

Figur 4      ein schematisches Ablaufdiagramm zur Erläuterung der Bestimmung einer Übertragungszeit eines Telegramms mit erhöhter Genauigkeit.

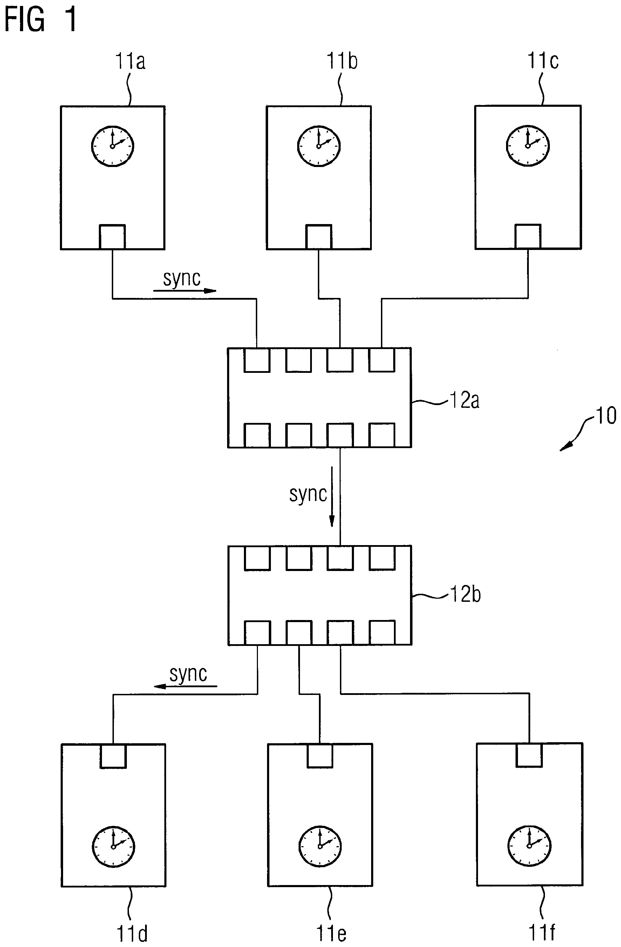

Figur 1 zeigt in schematischer Ansicht ein Kommunikationsnetzwerk 10, an das Netzwerkkomponenten 11a-f angeschlossen sind. Die Netzwerkkomponenten 11a-f können insbesondere Automatisierungsgeräte einer Automatisierungsanlage, z.B. zur Automatisierung eines elektrischen Energieversorgungsnetzes, sein. Es kann sich dabei beispielsweise um Schutzgeräte, Messgeräte, Phasormessgeräte, Power Meter, Power Quality-Geräte, Leit- und Steuergeräte, Schaltersteuerungen etc. einer elektrischen Energieautomatisierungsanlage handeln. Allgemein können solche Automatisierungsgeräte auch als Feldgeräte oder als IEDs ("intelligent electronic devices") bezeichnet werden.

Außerdem umfasst das Kommunikationsnetzwerk 10 Netzwerkkomponenten 12a-b, bei denen es sich beispielsweise um Switche, Bridges oder Router mit mehreren Ports handeln kann. Die Netzwerkkomponente 12a-b stellen in dem nachfolgend erläuterten Beispiel "Transparent Clocks" im Sinne der Norm IEEE 1588-2008 dar.

Die Netzwerkkomponenten 11a-f sind über die Netzwerkkomponenten 12a-b miteinander über Kommunikationsverbindungen verbunden, so dass jede Netzwerkkomponente mit jeder anderen Netzwerkkomponente Nachrichten austauschen kann. Außerdem umfassen alle Netzwerkkomponenten lokale Uhren, die hinsichtlich ihrer jeweiligen lokalen Uhrzeiten miteinander zu synchronisieren sind. Beispielhaft sei angenommen, dass die lokale Uhr der Netzwerkkomponente 11a eine Grandmaster-Uhr darstellt, auf deren Uhrzeit die lokalen Uhren aller anderen Netzwerckomponenten 11b-f zu synchronisieren sind.

In dem Kommunikationsnetzwerk 10 werden Nachrichten ausgetauscht, die beispielsweise Messwerte, Steuerbefehle, Zustandsmeldungen, aufgezeichnete Messwertverläufe oder Softwareaktualisierungen enthalten können. Um außerdem eine Zeitsynchronisation vorzunehmen, werden in dem Kommunikationsnetzwerk 10 zusätzlich auch Zeitsynchronisationsnachrichten ausgetauscht. Dies soll später genauer beschrieben werden.

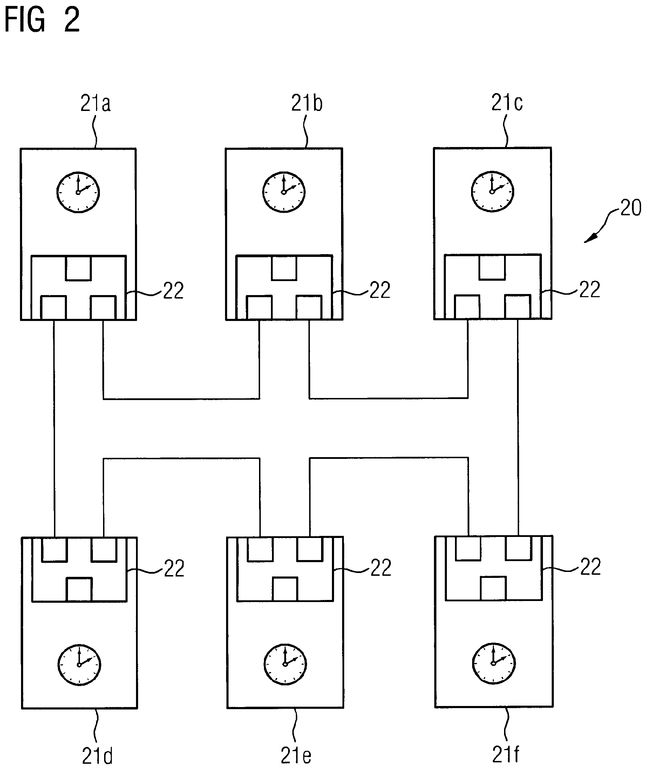

In Figur 2 ist ein weiteres Ausführungsbeispiel eines Kommunikationsnetzwerks 20 dargestellt, wobei das Kommunikationsnetzwerk 20 im Vergleich zum Kommunikationsnetzwerk 10 der Figur 1 eine ringförmige Topologie aufweist. Figur 2 zeigt in schematischer Ansicht ein Kommunikationsnetzwerk 20, an das mehrere Netzwerkkomponenten 21a-f angeschlossen sind.

Die Netzwerkkomponenten 21a-f umfassen integrierte Switche 22, bei denen es sich beispielsweise um 3-Port-Switche handeln kann. Auch die Netzwerkkomponenten 21a-f mit den integrierten Switchen stellen im Sinne der Norm IEEE 1588-2008 "Transparent Clocks" dar. Jede Netzwerkkomponente 21a-f weist überdies eine lokale Uhr auf.

In dem Kommunikationsnetzwerk 20 werden zur Synchronisation der lokalen Uhren Zeitsynchronisationsnachrichten ausgetauscht. Beispielhaft sei angenommen, dass die lokale Uhr der Netzwerkkomponente 21a eine Grandmaster-Uhr darstellt, auf deren Uhrzeit die lokalen Uhren aller anderen Netzwerkkomponenten 21b-f zu synchronisieren sind. Außerdem werden wie bereits oben zu Figur 1 erläutert auch andere Nachrichten ausgetauscht.

Anhand der Figur 1 soll nachfolgend beispielhaft ein Verfahren zur Zeitsynchronisation anhand von in dem Kommunikationsnetzwerk 10 übertragenen Zeitsynchronisationsnachrichten beschrieben werden. Das nachfolgend beschriebene Verfahren kann in entsprechender Weise auch auf das Kommunikationsnetzwerk 20 oder auf andere Kommunikationsnetzwerke, in denen eine Zeitsynchronisation durchgeführt wird, übertragen werden.

Beispielhaft soll nachfolgend beschrieben werden, wie die lokale Uhr der Netzwerkkomponente 11d mit der lokalen (Grandmaster-) Uhr der Netzwerkkomponente 11a synchronisiert wird.

In regelmäßigen Abständen sendet die Netzwerkkomponente 11a eine Zeitsynchronisationsnachricht "Sync" als Broadcast-Nachricht an die anderen Netzwerkkomponenten 11b-f, darunter auch an die Netzwerkkomponente 11d. Der Versendezeitpunkt $tsync_1$ der Zeitsynchronisationsnachricht wird der Zeitsynchronisationsnachricht als Information beigefügt. Alternativ zum direkten Beifügen des Versendezeitpunktes könnte dieser auch mittels einer nachfolgenden Folge-Nachricht übertragen werden.

Die Zeitsynchronisationsnachricht wird von der Netzwerkkomponente 11a zunächst an die Netzwerkkomponente 12a (Switch) übertragen. Diese leitet die Zeitsynchronisationsnachricht an die Netzwerkkomponente 12b (Switch) weiter, die die Zeitsynchronisationsnachricht ihrerseits an die Netzwerkkomponente 11d weiterleitet. Beim Empfang der Zeitsynchronisationsnachricht ermittelt die Netzwerkkomponente einen Empfangszeitpunkt $tsync_2$. Für den Empfangszeitpunkt $tsync_2$ gilt bei synchronisierten Uhrzeiten der lokalen Uhren der Netzwerkkomponente 11d und der Netzwerkkomponente 11a

$$tsync_2 = tsync_1 + T(Sync),$$

wobei T(Sync) hierbei die Laufzeit der Zeitsynchronisationsnachricht zwischen der Netzwerkkomponente 11a und der Netzwerkkomponente 11d angibt. Bei Kenntnis der Laufzeit T(Sync) und des Versendezeitpunkts $tsync_1$ der Zeitsynchronisationsnachricht kann somit die Uhrzeit der lokalen Uhr der Netzwerkkomponente 11d überprüft und ggf. - bei Abweichungen zwischen dem gemäß der lokalen Uhrzeit ermittelten Empfangszeitpunkt $tsync_2$ und der sich gemäß $tsync_1 + T(Sync)$ ergebenden Soll-Uhrzeit - nachgeführt werden.

Die Laufzeit T(Sync) setzt sich aus zwei Komponenten zusammen. Einerseits umfasst sie die Summe der Übertragungszeiten der Zeitsynchronisationsnachricht "Sync" entlang der einzelnen zwischen der zweiten und der ersten Netzwerkkomponente liegenden Kommunikationsverbindungen. Konkret setzt sich diese gesamte Übertragungszeit also aus den einzelnen Übertragungszeiten der Zeitsynchronisationsnachricht entlang der Kommunikationsverbindung zwischen der Netzwerkkomponente 11a und der Netzwerkkomponente 12a, entlang der Kommunikationsverbindung zwischen der Netzwerkkomponente 12a und der Netzwerkkomponente 12b und entlang der Kommunikationsverbindung zwischen der Netzwerkkomponente 12b und der Netzwerkkomponente 11d zusammen.

Als zweite Komponente geht in die Laufzeit T(Sync) der Zeitsynchronisationsnachricht in dem hier gezeigten Beispiel auch die Verweilzeit der Zeitsynchronisationsnachricht in den jeweiligen Netzwerkkomponenten, die zwischen der zweiten und der ersten Netzwerkkomponente liegen, ein. Eine solche Verweilzeit kann beispielsweise dadurch entstehen, dass vor dem Versand der Zeitsynchronisationsnachricht von der fraglichen Netzwerkkomponente noch andere Nachrichten versendet werden. Konkret setzt sich die gesamte Verweilzeit also aus den einzelnen Verweilzeiten der Zeitsynchronisationsnachricht in der Netzwerkkomponente 12a und in der Netzwerkkomponente 12b zusammen. Die Netzwerkkomponenten 12a und 12b stellen in diesem Beispiel Transparent Clocks gemäß IEEE 1588:2008 dar.

Sofern zwischen der Netzwerkkomponente mit der Grandmaster-Uhr und der Netzwerkkomponente mit der Slave-Uhr keine weiteren Netzwerkkomponenten angeordnet sind, fällt diese zweite Komponente der Laufzeit natürlich weg. Außerdem besteht die Möglichkeit, anstelle von "Transparent Clocks" nach IEEE 1588:2008, die die Zeitsynchronisationsnachrichten sozusagen durchreichen und zu diesem Zweck die eigene Verweilzeit der Zeitsynchronisationsnachricht erfassen, auch sogenannte "Boundary Clocks" nach IEEE 1588:2008 zu verwenden, die gegenüber dem Grandmaster eine Slave-Rolle einnehmen und gegenüber der nächstfolgenden zu synchronisierenden Netzwerkkomponente eine Master-Rolle übernehmen und selbst Zeitsynchronisationsnachrichten aussenden. Auch in diesem Fall liegen zwischen zwei zu synchronisierenden Netzwerkkomponenten üblicherweise keine weiteren Netzwerkkomponenten, die eine jeweilige Verweilzeit der Zeitsynchronisationsnachricht hervorrufen könnten, so dass auch hierbei die zweite Komponente der Laufzeit wegfallen würde.

Während die Verweilzeit - sofern vorhanden - von der jeweiligen Netzwerkkomponente durch Messung der Zeit zwischen dem Empfang und der Weiterleitung der Zeitsynchronisationsnachricht ermittelt und üblicherweise der Zeitsynchronisationsnachricht als Information beigefügt bzw. als Folgenachricht versendet wird, müssen die Übertragungszeiten entlang der einzelnen Kommunikationsverbindungen einzeln bestimmt werden.

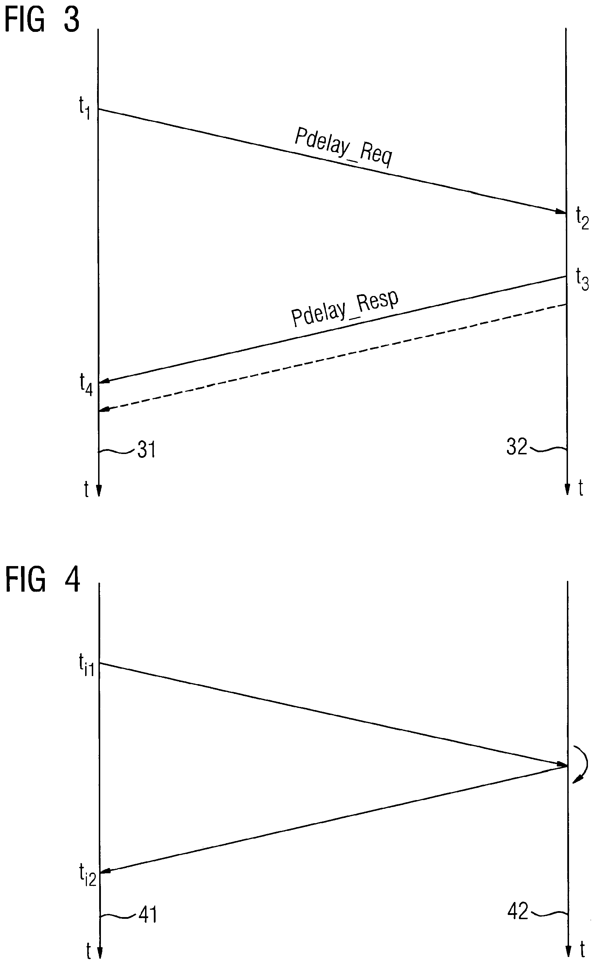

Anhand von Figur 3 soll nachfolgend zunächst erläutert werden, wie die Übertragungszeit zwischen zwei Netzwerkkomponenten gemäß dem bekannten "Pdelay-Verfahren" bestimmt wird. Nachfolgend wird anhand von Figur 4 ein Verfahren zum Bestimmen der Übertragungszeit mit erhöhter Genauigkeit beschrieben. Beispielhaft soll sowohl für das Verfahren gemäß Figur 3 als auch für das Verfahren gemäß Figur 4 die Bestimmung der Übertragungszeit eines Telegramms zwischen der Netzwerkkomponente 11d (nachfolgend auch als "erste Netzwerkkomponente bezeichnet") und der Netzwerkkomponente 12b (nachfolgend auch als "zweite Netzwerkkomponente bezeichnet") erläutert werden. Zur Ermittlung der gesamten Übertragungszeit eines Telegramms zwischen der Netzwerkkomponente 11a und der Netzwerkkomponente 11d muss die fragliche Bestimmung in entsprechender Weise für alle Teilstrecken zwischen jeweils zwei benachbarten Netzwerkkomponenten gesondert durchgeführt werden.

Dazu ist in Figur 3 ein Ablaufdiagramm angegeben, in dem die Übertragung der für die Bestimmung der Übertragungszeit notwendigen Telegramme entlang von Zeitstrahlen 31 und 32 schematisch eingetragen ist. Dabei repräsentiert der Zeitstrahl 31 die Ereignisse auf Seiten der ersten Netzwerkkomponente 11d und der Zeitstrahl 32 repräsentiert die Ereignisse auf Seiten der zweiten Netzwerkkomponente 12b.

Um gemäß dem bekannten Pdelay-Verfahren die Übertragungszeit eines Telegramms zwischen der ersten Netzwerkkomponente 11d und der zweiten Netzwerkkomponente 12b zu bestimmen, sendet die erste Netzwerkkomponente 11d zu einem Zeitpunkt $t_1$ ein Telegramm "Pdelay_Req" an die zweite Netzwerkkomponente 12b. Der Zeitpunkt $t_1$ wird per Zeitstempelung auf Basis der lokalen Uhr der ersten Netzwerkkomponente 11d bestimmt.

Die zweite Netzwerkkomponente 12b empfängt das Telegramm "Pdelay_Req", erfasst den zugehörigen Empfangszeitpunkt $t_2$ per Zeitstempelung auf Basis ihrer lokalen Uhr und speichert diesen Empfangszeitpunkt $t_2$. Zum Zeitpunkt $t_3$ sendet die zweite Netzwerkkomponente 12b als Antwort auf das Telegramm "Pdelay_Req" ein weiteres Telegramm "Pdelay_Resp" an die erste Netzwerkkomponente 11d. Dabei erfasst sie den Sendezeitpunkt $t_3$ per Zeitstempelung auf Basis ihrer lokalen Uhr und übermittelt die Zeitpunkte $t_2$ und $t_3$ an die erste Netzwerckomponente 11d. Diese Übermittlung kann mit dem Telegramm "PDelay_Resp" erfolgen oder mit einem Folgetelegramm stattfinden, wie es in Figur 3 mit einer gestrichelten Linie schematisch angedeutet ist. Außerdem können die Zeitpunkte $t_2$ und $t_3$ auch als ein Wert (z.B. $t_3$-$t_2$) übertragen werden.

Die erste Netzwerkkomponente 11d empfängt das Telegramm "Pdelay_Resp" und erfasst den Empfangszeitpunkt $t_4$ per Zeitstempelung auf Basis ihrer lokalen Uhr. Damit verfügt die erste Netzwerkkomponente über die Information über die Zeitpunkte $t_{-1}$ bis $t_4$ und kann gemäß der eingangs genannten Gleichung

$$T_{i\_j} = \frac{(t_2 - t_1) + (t_4 - t_3)}{2}$$

die Übertragungszeit eines Telegramms entlang der Kommunikationsverbindung zwischen der ersten Netzwerkkomponente 11d (Index i) und der zweiten Netzwerkkomponente 12b (Index j) bestimmen.

Nachteilig hieran ist, dass für die Bestimmung der Übertragungszeit insgesamt vier Zeitstempel benötigt werden, die jeweils mit Ungenauigkeiten behaftet sein können. Insbesondere diejenigen Zeitstempel, die beim Empfang eines Telegramms vergeben werden, können merklich zu den Ungenauigkeiten beitragen, da bei ihnen nicht die Möglichkeit besteht, das Ereignis - den Empfang des Telegramms - mit dem Zeitstempeltakt zu synchronisieren.

In Figur 4 wird daher ein Verfahren zum Bestimmen der Übertragungszeit eines Telegramms mit erhöhter Genauigkeit vorgestellt. Dazu ist auch in Figur 4 ein Ablaufdiagramm angegeben, in dem die Übertragung der für die Bestimmung der Übertragungszeit notwendigen Telegramme entlang von Zeitstrahlen 41 und 42 schematisch eingetragen ist. Dabei repräsentiert der Zeitstrahl 41 die Ereignisse auf Seiten der ersten Netzwerkkomponente 11d und der Zeitstrahl 42 repräsentiert die Ereignisse auf Seiten der zweiten Netzwerkkomponente 12b.

Zum Zeitpunkt $t_{i1}$ sendet die erste Netzwerkkomponente 11d (Index i) ein Telegramm an die zweite Netzwerkkomponente 12b (Index j). Der Zeitpunkt $t_{i1}$ wird hierbei von der ersten Netzwerkkomponente 11d per Zeitstempelung auf Basis der lokalen Uhr erfasst und als Sendezeitpunkt-Information abgespeichert.

Die zweite Netzwerkkomponente 12b sendet dieses Telegramm unmittelbar nach dem Empfang - ohne überhaupt einen Zeitstempel zu vergeben oder andere Verarbeitungen hinsichtlich des Telegramms durchzuführen - wieder an die erste Netzwerkkomponente 11d zurück. Dazu kann die zweite Netzwerkkomponente 12b beispielsweise vorübergehend in einen Schleifenbetrieb (Loop Mode) versetzt werden, in welchem sie Telegramme lediglich auf einer physikalischen Bitübertragungsebene, die der untersten Ebene im OSI-Modell entspricht, empfängt und direkt wieder zurücksendet.

Dass es sich bei dem eingetroffenen Telegramm um ein unmittelbar zurückzuleitendes Telegramm handelt, kann die zweite Netzwerkkomponente 12b beispielsweise an einem vorangestellten Präfix im Telegramm erkennen. Alternativ dazu könnte die zweite Netzwerkkomponente 12b von der ersten Netzwerkkomponente 11b über den Versand des fraglichen Telegramms mit einer Vorab-Nachricht informiert werden. Diese Vorabnachricht kann beispielsweise in einem festgelegten Zeitabstand vor dem Versand des fraglichen Telegramms versendet werden, so dass die zweite Netzwerkkomponente aus dem Empfang der Vorab-Nachricht den erwarteten Zeitpunkt des Eintreffens des fraglichen Telegramms ableiten kann. Weiter alternativ kann das Versenden des fraglichen Telegramms auch in regelmäßigen Zeitabständen erfolgen, so dass sich die zweite Netzwerkkomponente 12b entsprechend auf das Eintreffen der fraglichen Telegramms einrichten und den Schleifenbetrieb vorübergehend aktivieren kann.

Die erste Netzwerkkomponente 11d empfängt das zurückgesendete Telegramm und erfasst per Zeitstempelung den EmpfangsZeitpunkt $t_{i2}$. Dieser wird als Empfangszeitpunkt-Information abgespeichert. Aus den nunmehr vorliegenden Zeitpunkten $t_{i1}$ und $t_{i2}$ kann die erste Netzwerkkomponente 11d gemäß der Gleichung

$$T_{i\_j} = \frac{t_{i2} - t_{i1}}{2}$$

die gesuchte Übertragungszeit $T_{\cdot i\_j \cdot}$ bestimmen.

Der Wert der gemäß dem zuletzt beschriebenen Verfahren bestimmten Übertragungszeit ist genauer, da für seine Bestimmung anstelle von vier lediglich zwei Zeitstempel benötigt werden. Außerdem werden die beiden Zeitstempel mit derselben lokalen Uhr erfasst, nämlich der lokalen Uhr der ersten Netzwerkkomponente 11d, so dass auch Unterschiede, z.B. Driften oder Gangungenauigkeiten, zwischen den beiden lokalen Uhren keine Rolle spielen.

Um die Genauigkeit des zuletzt beschriebenen Verfahrens weiter zu erhöhen, sollte das Versenden des Telegramms mit dem internen Zeitstempeltakt der ersten Netzwerkkomponente 11d synchronisiert werden. Mit anderen Worten sollte der Sendezeitpunkt exakt auf einen Taktimpuls des Zeitstempeltaktes gelegt werden, so dass die Sendezeitpunkt-Information mit hoher Genauigkeit festgelegt werden kann und die einzige Ungenauigkeit nur noch durch die Zeitstempelung beim Empfang des Telegramms bei der ersten Netzwerkkomponente 11d entstehen kann.

Falls die Verweilzeit des Telegramms in der zweiten Netzwerckomponente 12b - trotz der unmittelbaren Zurücksendung - nicht vernachlässigbar sein sollte, kann sie vorab durch Messung ermittelt und bei der Bestimmung der Übertragungszeit berücksichtigt werden.

Das für die Bestimmung der Übertragungszeit verwendete Telegramm kann beispielsweise eine bestimmte festgelegte Testdatenfolge enthalten. Damit kann einerseits das fragliche Telegramm leicht erkannt und von anderen Nachrichten unterschieden werden, und andererseits kann ihr Aufbau an den einer typischen Zeitsynchronisationsnachricht angenähert werden, um möglichst dieselbe Kommunikationslast für die Messung zu erzeugen.

Das anhand von Figur 4 näher erläuterte Verfahren kann zusätzlich auch noch in entsprechender Weise in der Gegenrichtung durchgeführt werden. Hierbei würde die zweite Netzwerckomponente 12b ein weiteres Telegramm versenden und die erste Netzwerkkomponente 11d würde das empfangene weitere Telegramm unmittelbar zurücksenden. Die Bestimmung der Übertragungszeit erfolgt dann konsequenterweise in der zweiten Netzwerkkomponente 12b.

Die in beiden Netzwerkkomponenten ermittelten Werte der Übertragungszeiten können dann miteinander verglichen werden. Nur bei ausreichend guter Übereinstimmung beider Werte sollte die bestimmte Übertragungszeit als Parameter für die Zeitsynchronisation verwendet werden. Sollten jedoch signifikante Abweichungen zwischen den beiden Werten bestehen, so sollten die bestimmten Werte verworfen werden und es sollte eine wiederholte Bestimmung durchgeführt werden. Außerdem kann eine Fehlermeldung abgesetzt werden, die den Betreiber des Kommunikationsnetzwerks über die fehlerhafte Bestimmung der Übertragungszeit unterrichtet.

Obwohl das Verfahren zur Bestimmung der Übertragungszeit oben beispielhaft nur für die beiden Netzwerkkomponenten 11d und 12b erläutert worden ist, können die Übertragungszeiten zwischen den anderen jeweils benachbarten Netzwerkkomponenten in entsprechender Weise bestimmt werden.

**Patentansprüche**

1. Verfahren zum Bestimmen einer Übertragungszeit eines Telegramms in einem Kommunikationsnetzwerk (10), bei dem

- ein Telegramm von einer ersten Netzwerkkomponente (11d) an eine zweite Netzwerkkomponente (12b) entlang einer Kommunikationsverbindung übertragen wird, wobei die erste Netzwerkkomponente (11d) einen Sendezeitpunkt des Telegramms erfasst und eine entsprechende Sendezeitpunkt-Information des Telegramms abspeichert, und

- unter Verwendung der Sendezeitpunkt-Information die Übertragungszeit des Telegramms entlang der Kommunikationsverbindung bestimmt wird, wobei

- die zweite Netzwerkkomponente (12b) das Telegramm unmittelbar nach seinem Eintreffen bei der zweiten Netzwerkkomponente (12b) an die erste Netzwerkkomponente (11d) zurücksendet,

- die erste Netzwerkkomponente (11d) bei Empfang des zurückgesendeten Telegramms einen Empfangszeitpunkt des Telegramms erfasst und eine entsprechende Empfangszeitpunkt-Information des Telegramms abspeichert, und

- die Übertragungszeit des Telegramms entlang der Kommunikationsverbindung unter Verwendung der Sendezeitpunkt-Information des Telegramms und der Empfangszeitpunkt-Information des Telegramms bestimmt wird,

**dadurch gekennzeichnet, dass**

- die zweite Netzwerkkomponente (12b) das Telegramm lediglich auf einer physikalischen Bitübertragungsebene empfängt und nach dem Empfang direkt an die erste Netzwerkkomponente (11d) zurücksendet; und

- die erste Netzwerkkomponente (11d) den Zeitpunkt des Versendens des Telegramms mit einem für eine interne Zeitstempelung verwendeten Zeitstempeltakt synchronisiert.

2. Verfahren nach Anspruch 1,
**dadurch gekennzeichnet, dass**

- die Übertragungszeit des Telegramms entlang der Kommunikationsverbindung gemäß der Gleichung

$$T_{i\_j} = \frac{t_{i2} - t_{i1}}{2}$$

bestimmt wird, mit

$T_{i\_j}$: Übertragungszeit des Telegramms entlang der Kommunikationsverbindung zwischen Netzwerkkomponente i und Netzwerkkomponente j;

$t_{i1}$: Sendezeitpunkt-Information, die den Sendezeitpunkt des Telegramms bei Netzwerkkomponente i angibt;

$t_{i2}$: Empfangszeitpunkt-Information, die den Empfangszeitpunkt des Telegramms bei Netzwerkkomponente i angibt.

3. Verfahren nach einem der Ansprüche 1 oder 2,
**dadurch gekennzeichnet, dass**

- das Telegramm eine Testdatenfolge enthält.

4. Verfahren nach einem der vorangehenden Ansprüche,
**dadurch gekennzeichnet, dass**

- auch die zweite Netzwerkkomponente (12b) eine Übertragungszeit eines weiteren Telegramms zwischen der zweiten Netzwerckomponente und der ersten Netzwerkkomponente (11d) bestimmt, indem das weitere Telegramm von der zweiten Netzwerkkomponente (12b) an die erste Netzwerkkomponente (11d) entlang der Kommunikationsverbindung übertragen wird, wobei die zweite Netzwerkkomponente (12b) einen Sendezeitpunkt des weiteren Telegramms erfasst und eine entsprechende Sendezeitpunkt-Information des weiteren Telegramms abspeichert,
- die erste Netzwerkkomponente (11d) das weitere Telegramm unmittelbar nach seinem Eintreffen bei der ersten Netzwerckomponente (11d) an die zweite Netzwerkkomponente (12b) zurücksendet,
- die zweite Netzwerkkomponente (12b) bei Empfang des zurückgesendeten weiteren Telegramms einen Empfangszeitpunkt des weiteren Telegramms erfasst und eine entsprechende Empfangszeitpunkt-Information des weiteren Telegramms abspeichert, und
- die Übertragungszeit des weiteren Telegramms entlang der Kommunikationsverbindung unter Verwendung der Sendezeitpunkt-Information des weiteren Telegramms und der Empfangszeitpunkt-Information des weiteren Telegramms bestimmt wird.

5. Verfahren nach Anspruch 4,
**dadurch gekennzeichnet, dass**

- die von der ersten Netzwerkkomponente (11d) bestimmte Übertragungszeit des Telegramms und die von der zweiten Netzwerckomponente (12b) bestimmte Übertragungszeit des weiteren Telegramms miteinander verglichen werden, und
- bei einer vorliegenden Abweichung, die einen vorgegebenen Schwellenwert übersteigt, die bestimmten Übertragungszeiten verworfen werden.

6. Eine erste und eine zweite Netzwerkkomponente (11d, 12b) zum Betrieb in einem Kommunikationsnetz (10) mit mehreren zeitlich miteinander zu synchronisierenden anderen Netzwerkkomponenten (11a-f, 12a-b), wobei die erste und die zweite Netzwerkkomponente (11d, 12b) dazu eingerichtet sind, zum Bestimmen einer Übertragungszeit eines Telegramms entlang einer Kommunikationsverbindung zwischen der ersten Netzwerkkomponente (11d) und der zweiten Netzwerkkomponente (12b)

- ein Telegramm von der ersten Netzwerkkomponente (11d) an die zweite Netzwerkkomponente (12b) entlang der Kommunikationsverbindung zu versenden und einen Sendezeitpunkt des Telegramms zu erfassen und eine entsprechende Sendezeitpunkt-Information des Telegramms abzuspeichern, und
- unter Verwendung der Sendezeitpunkt-Information die Übertragungszeit des Telegramms entlang der Kommunikationsverbindung zu bestimmen,
**dadurch gekennzeichnet, dass**
- die zweite Netzwerkkomponente (12b) dazu eingerichtet ist, das Telegramm unmittelbar nach seinem Eintreffen bei der zweiten Netzwerkkomponente (12b) an die erste Netzwerkkomponente (11d) zurückzusenden, wobei die zweite Netzwerkkomponente (12b) das Telegramm lediglich auf einer physikalischen Bitübertragungsebene empfängt und nach dem Empfang direkt an die erste Netzwerkkomponente (11d) zurücksendet,
- die erste Netzwerkkomponente (11d) dazu eingerichtet ist, bei Empfang des zurückgesendeten Telegramms einen Empfangszeitpunkt des Telegramms zu erfassen und eine entsprechende Empfangszeitpunkt-Information des Telegramms abzuspeichern,
- die erste Netzwerkkomponente (11d) dazu eingerichtet ist, die Übertragungszeit des Telegramms entlang der Kommunikationsverbindung unter Verwendung der Sendezeitpunkt-Information des Telegramms und der Empfangszeitpunkt-Information des Telegramms zu bestimmen, und
- die erste Netzwerkkomponente (11d) dazu eingerichtet ist, den Zeitpunkt des Versendens des Telegramms mit einem für eine interne Zeitstempelung verwendeten Zeitstempeltakt zu synchronisieren.

## Claims

1. Method for determining a propagation delay of a message in a communications network (10), in which method

- a first network component (11d) transmits a message to a second network component (12b) along a communications link, wherein the first network component (11d) registers a send time for the message and saves a corresponding item of send-time information for the message, and
- the send-time information is used to determine the propagation delay of the message along the communications link, wherein
- the second network component (12b) returns the message to the first network component (11d) immediately after it arrives at the second network component (12b),
- the first network component (11d), on receiving the returned message, registers a receive time for the message and saves a corresponding item of receive-time information for the message, and
- the send-time information for the message and the receive-time information for the message are used to determine the propagation delay of the message along the communications link, **characterized in that**
- the second network component (12b) receives the message and returns said message immediately after receipt to the first network component (11d), solely at a physical, bit-transmission level; and
- the first network component (11d) synchronizes the time of sending the message with a timestamp clock used for internal timestamping.

2. Method according to Claim 1, **characterized in that**

   - the propagation delay of the message along the communications link is determined using the equation:

$$T_{i\_j} = \frac{t_{i2} - t_{i1}}{2}$$

   Where
   $T_{i\_j}$ is the propagation delay of the message along the communications link between network component i and network component j;

   $t_{i1}$ is the send-time information defining the time the message is sent from network component i;
   $t_{i2}$ is the receive-time information defining the time the message is received at network component i.

3. Method according to either of Claims 1 and 2, **characterized in that**

   - the message contains a test-data sequence.

4. Method according to any of the preceding claims, **characterized in that**

   - the second network component (12b) also determines a propagation delay of a further message between the second network component and the first network component (11d) by the second network component (12b) transmitting the further message to the first network component (11d) along the communications link, wherein the second network component (12b) registers a send time for the further message and saves a corresponding item of send-time information for the further message,
   - the first network component (11d) returns the further message to the second network component (12b) immediately after it arrives at the first network component (11d),
   - the second network component (12b), on receiving the returned further message, registers a receive time for the further message and saves a corresponding item of receive-time information for the further message, and
   - the send-time information for the further message and the receive-time information for the further message are used to determine the propagation delay of the further message along the communications link.

5. Method according to Claim 4, **characterized in that**

   - the propagation delay of the message determined by the first network component (11d) is compared with the propagation delay of the further message determined by the second network component (12b), and
   - if there is a difference that exceeds a preset threshold value, the determined propagation delays are discarded.

6. A first and a second network component (11d, 12b) for operation in a communications network (10) containing a plurality of other network components (11a-f, 12a-b) to be synchronized with one another in time, wherein the first and second network components (11d, 12b) are designed, for the purpose of determining a propagation delay of a message along a communications link between the first network component (11d) and the second network component (12b),

   - to send a message from the first network component (11d) to the second network component (12b) along the communications link, and to register a send time of the message and save a corresponding item of send-time information for the message, and

- to use the send-time information to determine the propagation delay of the message along the communications link, **characterized in that**

- the second network component (12b) is designed to return the message to the first network component (11d) immediately after it arrives at the second network component (12b), wherein the second network component (12b) receives the message and returns said message immediately after receipt to the first network component (11d), solely at a physical, bit-transmission level,

- the first network component (11d) is designed to register, on receiving the returned message, a receive time for the message and to save a corresponding item of receive-time information for the message,

- the first network component (11d) is designed to use the send-time information for the message and the receive-time information for the message to determine the propagation delay of the message along the communications link, and

- the first network component (11d) is designed to synchronize the time of sending the message with a timestamp clock used for internal timestamping.

**Revendications**

1. Procédé de détermination d'un temps de transmission d'un télégramme dans un réseau (10) de communication, dans lequel

- on transmet le télégramme d'un premier élément (11d) du réseau à un deuxième élément (12b) du réseau suivant une liaison de communication, dans lequel le premier élément (11d) du réseau détecte un instant d'envoi du télégramme et mémorise une information correspondante d'instant d'envoi du télégramme et

- en utilisant l'information d'instant d'envoi, on détermine le temps de transmission du télégramme suivant la liaison de communication, dans lequel

- le deuxième élément (12b) du réseau renvoie au premier élément (11d) du réseau le télégramme, immédiatement après son arrivée chez le deuxième élément (12b) du réseau,

- le premier élément (11d) du réseau relève, à la réception du télégramme renvoyé, un instant de réception du télégramme et mémorise une information correspondante d'instant de réception du télégramme et

- on détermine le temps de transmission du télégramme suivant la liaison de communication, en utilisant l'information de l'instant d'envoi du télégramme et l'information de l'instant de réception du télégramme,
**caractérisé en ce que**

- le deuxième élément (12b) du réseau reçoit le télégramme seulement sur un plan physique de transmission de bit et le renvoie, après la réception, directement au premier élément (11d) du réseau et

- le premier élément (11d) du réseau synchronise l'instant de l'envoi du télégramme avec une horloge d'horodatage utilisée pour un horodatage interne.

2. Procédé suivant la revendication 1, **caractérisé en ce que**

- on détermine le temps de transmission du télégramme suivant la liaison de communication suivant l'équation

$$T_{i-j} \frac{t_{i2} - t_{i1}}{2}$$

dans laquelle

$T_{i\text{-}j}$ : est le temps de transmission du télégramme suivant la liaison de communication entre l'élément $i$ du réseau et l'élément $j$ du réseau ;

$T_{i1}$ : est l'information de l'instant d'envoi, qui indique-l'instant d'envoi du télégramme chez l'élément i du réseau ;

$T_{i2}$ : est l'information d'instant de réception, qui indique l'instant de réception du télégramme chez l'élément $i$ du réseau.

3. Procédé suivant l'une des revendications 1 ou 2, **caractérisé en ce que**

- le télégramme contient une séquence de données de test.

4. Procédé suivant l'une des revendications précédentes, **caractérisé en ce que**

- le deuxième élément (12b) du réseau détermine aussi un temps de transmission d'un autre télégramme entre le deuxième élément du réseau et le premier élément (11d) du réseau, en transmettant, suivant la liaison de communication, l'autre télégramme du deuxième élément (12b) du réseau au premier élément (11d) du réseau, le deuxième élément (12b) du réseau relevant un instant d'émission de l'autre télégramme et mémorisant une information correspondante d'instant d'émission de l'autre télégramme,

- le premier élément (11d) du réseau renvoie au deuxième élément (12b) du réseau l'autre télégramme, immédiatement après son arrivée chez le premier élément (11d) du réseau,

- le deuxième élément (12b) du réseau relève, à la réception de l'autre télégramme renvoyé, un instant de réception de l'autre télégramme et mémorise une information correspondante d'instant de réception de l'autre télégramme et

- on détermine le temps de transmission de l'autre télégramme suivant la liaison de communication, en utilisant l'information de l'instant d'émission de l'autre télégramme et l'information de l'instant de réception de l'autre télégramme.

5. Procédé suivant la revendication 4, **caractérisé en ce que**

- on compare le temps de transmission du télégramme, déterminé par le premier élément (11d) du réseau, au temps de transmission de l'autre télégramme, déterminé par le deuxième élément (12b) du réseau et

- s'il y a un écart qui dépasse une valeur de seuil donnée à l'avance, on rejette les temps de transmission déterminés.

6. Un premier et un deuxième éléments (11d, 12b) de réseau destinés à fonctionner dans un réseau (10) de communication ayant plusieurs autres éléments (11a-f, 12a-b) de réseau à synchroniser entre eux dans le temps, le premier et le deuxième éléments (11d, 12b) du réseau étant conçus pour déterminer un temps de transmission d'un télégramme suivant une liaison de communication entre le premier élément (11d) du réseau et le deuxième élément (12b) du réseau,

- pour envoyer un télégramme du premier élément (11d) du réseau au deuxième élément (12b) du réseau suivant la liaison de communication et pour relever un instant d'émission du télégramme et pour mémoriser une information correspondante d'instant d'émission du télégramme et

- en utilisant l'information de l'instant d'émission pour déterminer le temps de transmission du télégramme suivant la liaison de communication, **caractérisés en ce que**

- le deuxième élément (12b) du réseau est conçu pour renvoyer, au premier élément (11d) du réseau, le télégramme immédiatement après son arrivée chez le deuxième élément (12b) du réseau, le deuxième élément (12b) du réseau recevant le télégramme, seulement sur un plan physique de transmission de bit, et le renvoyant après la réception directement au premier élément (11d) du réseau,

- le premier élément (11d) du réseau étant conçu pour relever, à la réception du télégramme renvoyé, un instant du télégramme et mémoriser une information correspondante d'instant de réception du télégramme,

- le premier élément (11d) du réseau étant conçu pour déterminer le temps de transmission du télégramme suivant la liaison de communication, en utilisant l'information de l'instant d'émission du télégramme et l'information de l'instant de réception du télégramme et

- le premier élément (11d) du réseau est conçu pour synchroniser l'instant d'envoi du télégramme avec une horloge d'horodatage utilisée pour un horodatage interne.

## FIG 1

FIG 2

## FIG 3

$t_1$

Pdelay_Req

$t_2$

$t_3$

Pdelay_Resp

$t_4$

31                    32

t                                t

## FIG 4

$t_{i1}$

$t_{i2}$

41                    42

t                                t

**EP 3 170 285 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2011141922 A1
- US 8289858 B2